# EUROPEAN PATENT APPLICATION

(11) **EP 1 944 703 A2**
(43) Date of publication of application: **16.07.2008**
(21) Application number: 07024904.0
(22) Date of filing: 21.12.2007
(51) Int. Cl.: G06F 17/30

(54) **Communication information searching**

(30) Priority: 27.12.2006 US 616655
(71) Applicant: Nortel Networks Limited, St Laurent, Québec H4S 2A9 (CA)
(72) Inventor: Sylvain, Dany, Gatineau Quebec J8T 6A6 (CA)
(74) Representative: Boyce, Conor

(57) **Abstract**

A search engine or like application is adapted to provide a communication search in lieu of or in addition to its normal information search under certain conditions to obtain communication information. Normally, search request information provided in a search request is used to provide a normal information search. If the search request information contains communication search indicia, the communication search is provided using the search request information to obtain the communication information for an entity. The communication information for the entity may be directly presented to the user or may be used to present a communication initiation option to the user. The communication initiation option allows the user to initiate a communication session directly or indirectly to the entity. The communication information or the communication initiation option may be presented to the user alone or in conjunction with any search results from the normal information search.

## Description

### Field of the Invention

The present invention relates to communications, and in particular to facilitating searches for communication information in an efficient and effective manner.

### Background of the Invention

Search engines provided by Yahoo, Google, and the like are widely used to search the Internet for all types of information. Aspects of these search engines have been extended to allow users to search for information on their local computers in addition to on the Internet. Users may employ these search engines to identify communication information necessary for initiating or establishing communications with other entities, which may include individuals or organizations. Unfortunately, searches for communication information are treated no differently than searches for any other types of information. Even if communication information is available in these traditional search results, the communication information is not distinguished from any other search result. As such, the communication information may be buried within any number of normal search results, or the best locations for communication information may not be searched, or may not be searched in a manner that is most effective in obtaining communication information.

Given the popularity and widespread use of these search engines, there is a need to employ these search engines to obtain communication information in a more efficient and effective manner. There is a further need to reduce the complexity associated with searching for communication information as well as presenting information to users in an effective manner. There is yet a further need to present the communication information to these users apart from normal search results.

### Summary of the Invention

A search engine or like application is adapted to provide a communication search in lieu of or in addition to its normal information search under certain conditions to obtain communication information. Normally, search request information provided in a search request is used to provide a normal information search. If the search request information in the search request contains communication search indicia, the communication search is provided using the search request information to obtain the communication information for an entity. The communication information for the entity may be directly presented to the user or may be used to present a communication initiation option to the user. The communication initiation option allows the user to initiate a communication session directly or indirectly with the entity. The communication information or the communication initiation option may be presented to the user alone or in conjunction with any search results from the normal information search.

The communication information provided in response to a communication search is information related to communicating with another entity, and may include physical addresses, communication addresses, such as uniform resource locators, instant message addresses, email addresses, directory numbers, and the like for the entity, as well as related information. If available for the communication search, the communication information may include presence information, calendar or scheduling information, location information, status information, and the like for the entity. The communication information, communication initiation option, or normal search results may be presented to the user along with targeted advertisements, which are based on the communication information recovered from the communication search or additional information provided by the user.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment according to one embodiment of the present invention.
FIGURES 2A-2C depict a communication flow for an enterprise embodiment of the present invention.
FIGURE 3 illustrates a search window presented by a browser according to one embodiment of the present invention.
FIGURE 4 illustrates a search window according to the enterprise embodiment wherein normal search results and communication search results are displayed.
FIGURE 5 illustrates a browser according to the enterprise embodiment providing a communication window.
FIGURES 6A-6C depict a communication flow for a public embodiment of the present invention.
FIGURE 7 illustrates a search window according to the public embodiment wherein normal search results and communication search results are displayed.
FIGURE 8 illustrates a browser according to the public embodiment providing a communication window.
FIGURE 9 is a block representation of a communication environment according to a local embodiment of the present invention.
FIGURES 10A-10C depict a communication flow for the local embodiment of the present invention.
FIGURE 11 is a block representation of a computing terminal according to one embodiment of the present invention.
FIGURE 12 is a block representation of a communication search server according to one embodiment of the present invention.
FIGURE 13 is a block representation of a normal search server according to one embodiment of the present invention.

### Detailed Description of the Preferred Embodiments

The present invention adapts a search engine or like application to provide a communication search in lieu of or in addition to its normal information search under certain conditions to obtain communication information. In normal operation, search request information provided in a search request is used to provide a normal information search. If the search request information in the search request contains communication search indicia, such as certain patterns, names, or keywords, the communication search is provided using all or part of the search request information to obtain the communication information for an entity, which may be a person, organization, business, or the like. The communication information for the entity may be directly presented to the user or may be used to present a communication initiation option to the user. The communication initiation option allows the user to initiate a communication session directly or indirectly with the entity. The communication sessions may include voice, audio, video, email, instant messaging, and like sessions. When a communication search is triggered, the normal information search results may be provided along with the communication search results. The communication information or the communication initiation option may be presented to the user alone or in conjunction with the search results from the normal information search.

The communication information, communication initiation option, or normal search results may be presented to the user along with targeted advertisements, which are based on the communication information recovered from the communication search or additional information provided by the user. The communication information as well as the additional information provided by the user may pertain to location. In one embodiment, the targeted advertisements are based on the location of the user or the entity associated with the communication information. The targeted advertisements may be presented to the user before, during, or after establishment of a communication session between the user and the person associated with the communication information.

Search requests are initiated by the user from a computing terminal, which may contain the search engine or may send the search request to a remote server, which contains the search engine. The normal information search may be a traditional web search or other type of general search of local or remote databases. The normal information search is not a specific search for communication information for an entity as is the communication search. The communication information provided in response to a communication search may include physical addresses, communication addresses, such as uniform resource locators, instant message addresses, email addresses, directory numbers and the like for the entity. If available for the communication search, the communication information may include presence information, calendar or scheduling information, location information, status information, and the like for the entity. Prior to delving into the operational details of select embodiments of the present invention, an overview of a communication environment in which these embodiments may be employed is described.

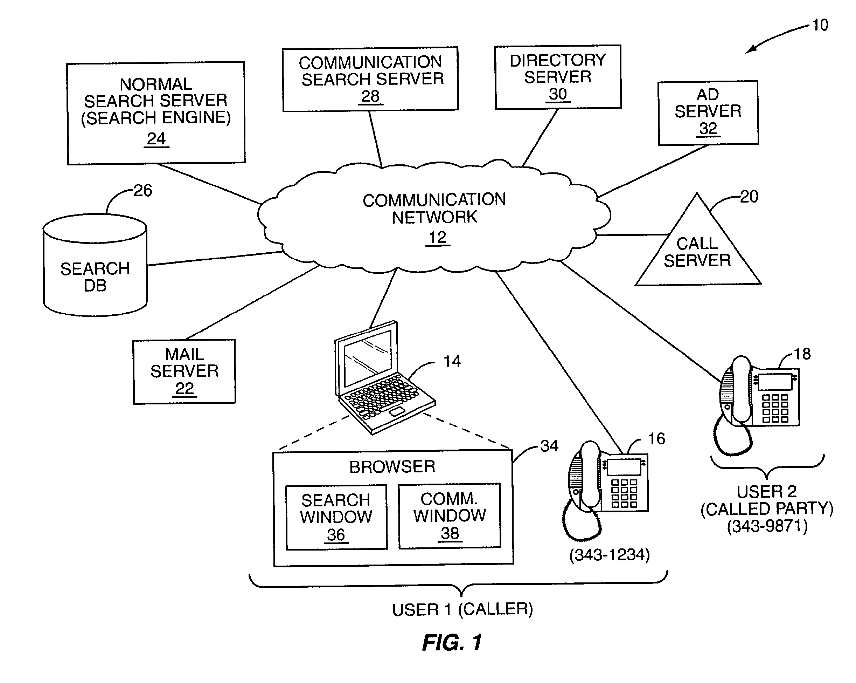

With reference to Figure 1, a communication environment 10 is centered about a communication network 12, which directly or indirectly supports a computing terminal 14 and a first telephone terminal 16, which are associated with User 1, who may be referred to as a caller. With the present invention, User 1 is able to obtain communication information associated with a second user, User 2, who may be referred to as a called party. User 2 is associated with a second telephone terminal 18, which is also supported directly or indirectly by the communication network 12. Various types of communications may be established between User 1 and User 2. As illustrated, voice sessions may be established between the first telephone terminal 16 and the second telephone terminal 18 under the control of a call server 20. Various other types of audio, video, text, and like communication sessions may be established between various devices associated with users 1 and 2; however, for the following examples, voice-based communications, which may be referred to as calls, are the focus. Those skilled in the art will recognize that the concepts of the present invention are not limited to calls.

In effect, the call server 20 may communicate directly with the first and second telephone terminals 16 and 18, or indirectly through affiliated switches or gateways (not shown) to assist in initiating, terminating, and controlling calls involving the first and second telephone terminals 16, 18. In certain embodiments, the call server 20 may receive instructions from another entity to essentially initiate a call from the first telephone terminal 16 on behalf of User 1 to the second telephone terminal 18. Examples are provided further below.

The computing terminal 14 may take many forms, such as a personal computer, personal digital assistant, or the like, and will be capable of running various types of software applications. One such application is an email and organization application, such as Microsoft^{®} Office Outlook^{®}, which may support calendar or scheduling functions, email functions, and contact and task management functions. These applications are often provided as clients of an email organization server function, which may be provided by a mail server 22 in traditional fashion.

Also depicted in Figure 1 are a normal search server 24, search database (DB) 26, communication search server 28, directory server 30, and ad server 32. The normal search server 24 provides a search engine that is capable of providing traditional web-based services relating to any number of search databases 26, which represent a repository of searchable information on the worldwide web, and may represent any number of databases and servers that are configured to respond to search queries of a search engine afforded by the normal search server 24. In general, the normal search server 24 provides the normal information searches using the search databases 26. The normal search server 24 is able to receive search requests and monitor the search request information in the search request to determine if the search request information contains communication search indicia. If communication search indicia is detected, the normal search server 24 may invoke a communication search in lieu of or in addition to the normal information search. As illustrated, a communication search is initiated by sending a communication search request to the communication search server 28, which is capable of accessing the directory server 30 to obtain communication information in response to the communication information request. The communication information responsive to the communication information request is then passed back to the normal search server 24 through the communication search server 28. The communication information, along with any search results from the normal information search, may then be presented to the entity that initiated the search request.

Many search requests are facilitated via a browser 34, which also runs as an application on the computing terminal 14. A search window 36 may be provided by the browser 34 through which User 1 can enter the search request information and initiate the sending of the search request to the normal search server 24. Any communication information or search results from a normal information search may be presented to the user through the browser 34. In one embodiment, the communication information is presented to the user via new content in the search window 36. In another embodiment, the normal search server 24 provides the communication initiation options to the user through the browser 34, and in particular through a new communication window 38 provided by the browser 34. Through the search window 36 or the communication window 38, depending on the configuration, communication sessions may be initiated with an entity associated with the communication information.

In the illustrated embodiments, User 1 may select a link or an icon provided in the communication window 38 to initiate a call to the second telephone terminal 18 from the first telephone terminal 16, when the communication information identifies an address or directory number associated with User 2, and the second telephone terminal 18 in particular. The computing terminal 14 may provide instructions directly to the call server 20, which may interact with the first and second telephone terminals 16, 18 to effect a call therebetween. Alternatively, the computing terminal 14 may send a request to the communication search server 28 or other type of service node, which will instruct the call server 20 to initiate a call between the first telephone terminal 16 and the second telephone terminal 18.

While the communication information provides sufficient information to initiate the call to User 2, the information required to identify the first telephone terminal 16 or an address or directory number associated therewith may be stored on the computing terminal 14, or may be retrieved from User 1 during the session initiation process. During presentation of communication information, communication initiation options, or search results from the normal information search, the normal search server 24 or communication search server 28 may access the ad server 32 to obtain advertising information, which is presented to User 1 alone or in combination with the communication related information. The advertising information may be selected based on communication information associated with User 1 or User 2. In one embodiment, relative location information is derived from the communication information obtained for User 2 or provided by User 1 to aid in the selection of the particular advertising information to be presented to User 1. As noted above, the communication information obtained by the normal search server 24 may include presence information, calendar or scheduling information, location information, status information, and the like, as well as any physical address or communication address information, such as Uniform Resource Locators and directory numbers. The advertising information presented to User 1 may be based on these various types of communication information as well as location related information derived from the physical or communication addresses associated with a particular entity.

The concepts of the present invention may be implemented in numerous environments. The following examples illustrate enterprise and public network environments, along with a local environment wherein all or part of the search engine functionality is provided in the computing terminal 14. In the enterprise and public embodiments, the search engine is provided as described above, in the normal search server 24. Notably, the normal search server 24 may be a different type of server that is not necessarily limited to searching the Internet or providing web-based searches. The normal search server 24 is used merely because web searches initiated through appropriately configured browsers 34 are particularly beneficial.

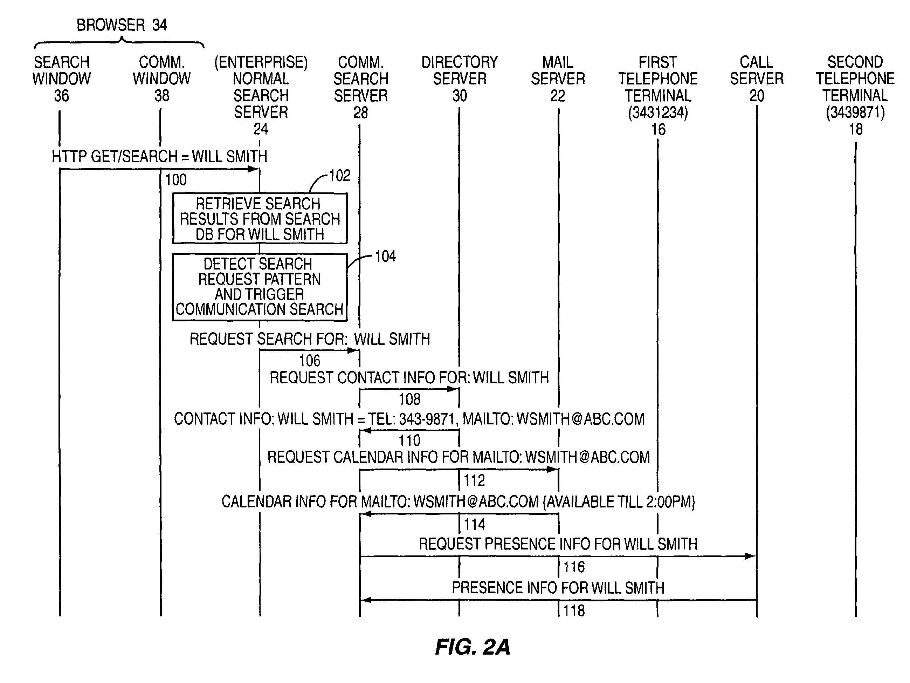

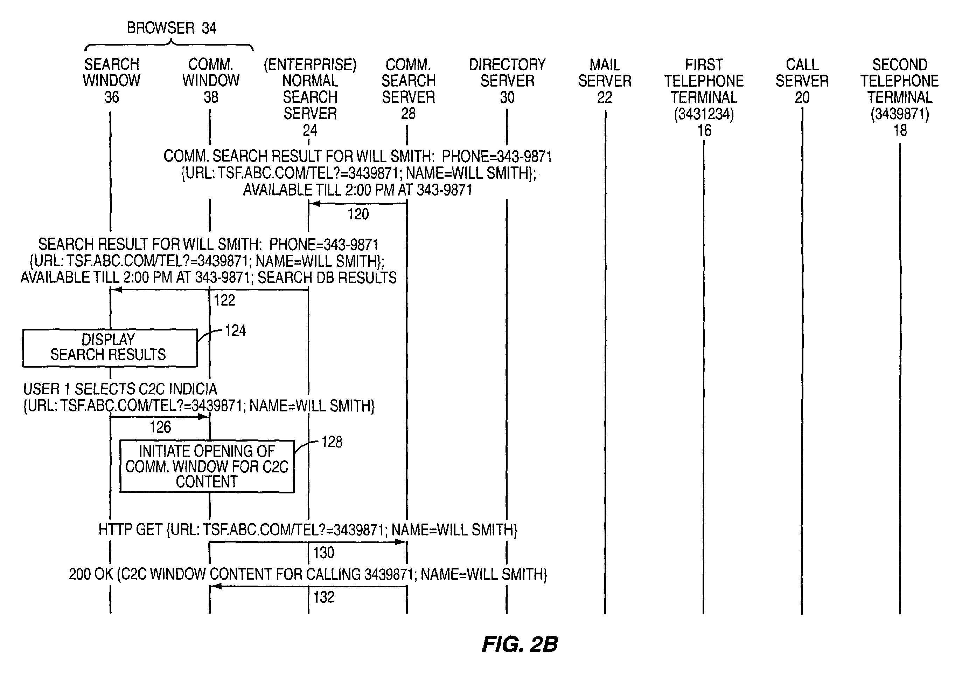

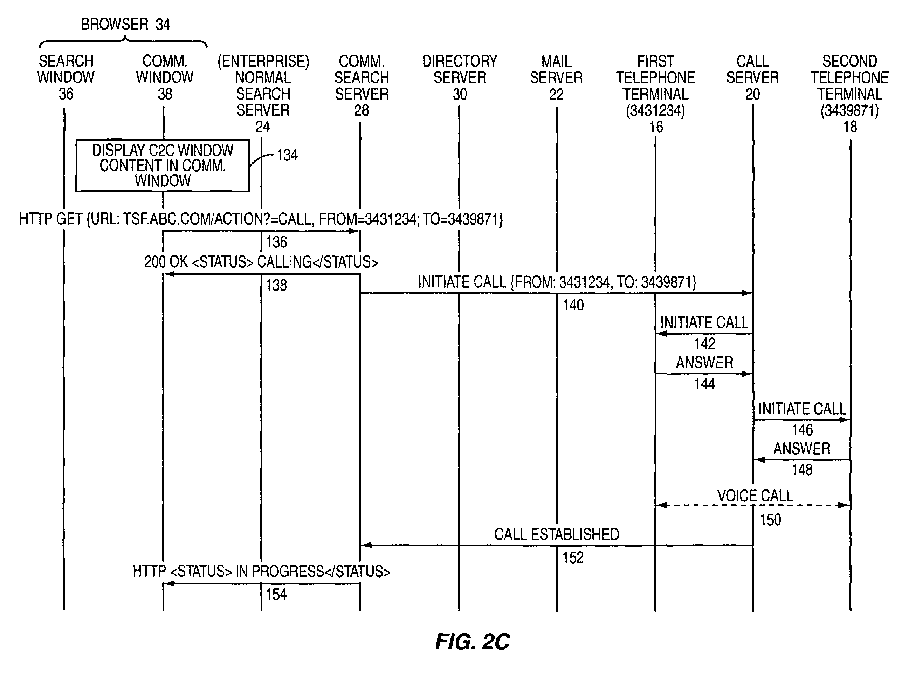

Turning now to Figures 2A-2C, a communication flow diagram is used to illustrate operation of the present invention in an enterprise embodiment. In an enterprise embodiment, the normal search server 24 and search database 26 are associated with a particular enterprise network, which supports the computing terminal 14 and perhaps the first telephone terminal 16. Further, the directory server 30 and the mail server 22 are within or directly affiliated with the enterprise. The normal search server 24 may facilitate searches throughout any number of search databases 26 within the enterprise, as well as providing the communication search. The normal search server 24 may also facilitate web searches within or outside of the enterprise. For the communication flow provided in Figures 2A-2C, the search request will contain communication search indicia, which will trigger the normal search server 24 to initiate a communication search via the communication search server 28. The communication search server 28 will effect a communication search, which in this embodiment entails running searches based on all or a portion of the search request information on the directory server 30, mail server 22, and call server 20. In this embodiment, the call server 20 is assumed to contain or have access to presence information associated with an entity identified in the search request information.
The normal search server 24 will provide a normal search through the search databases 26, and combine that information with the information returned from the communication search server 28 to present combined search results back to User 1 via the browser 34. The information presented to the user may provide a link or like icon to provide a communication initiation option to the user. Selection of the communication initiation option will result in the call server 20 interacting with the first and second telephone terminals 16, 18 to establish a call therebetween. The specific details of the communication flow follow.

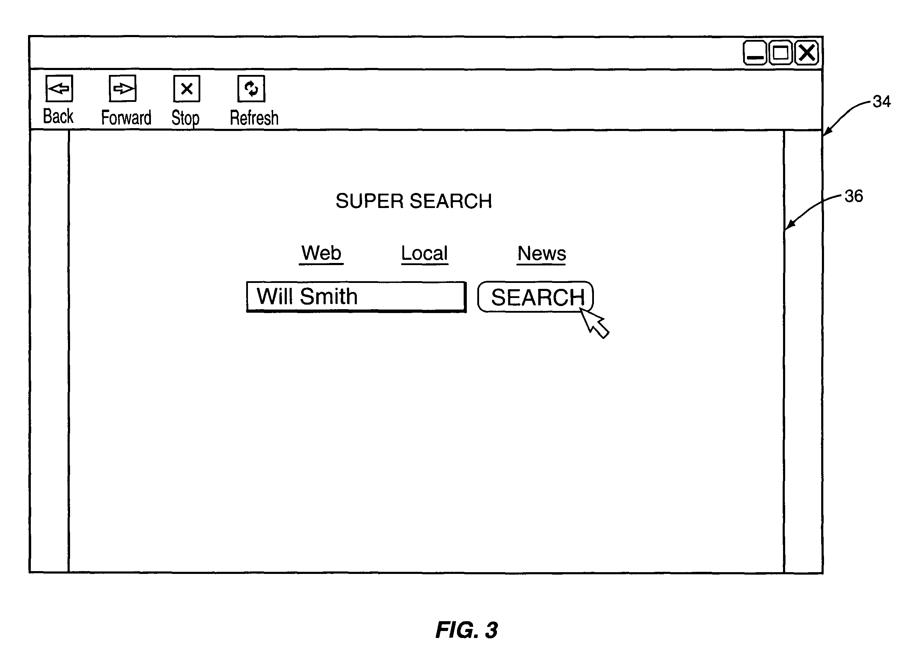

Initially, User 1 will enter search request information into a search window 36 of a browser 34**,** as illustrated in Figure 3. In this example, the search request information is the name "Will Smith" and the search request information entered by the user contains capital letters for the first letters of the first and last names of Will Smith. In this example, the search engine provided in the normal search server 24 is configured to recognize capitalization of the first letters of one or more words as entities for which communication information may be available. As such, detection of this pattern will trigger a communication search according to the present invention. Those skilled in the art will recognize any number of patterns or keywords that may be used to trigger a communication search. For example, the search engine of the normal search server 24 may simply recognize common names within the search request information and trigger the communication search. Other examples of communication search indicia may include presenting number sequences according to a defined dialing plan, such as XXX-XXX-XXXX, XXX-XXXX, XXXX, and the like. The communication search indicia may recognize various types of communication addresses having a pattern such as AAAA@BBBB.CCC. Further, special keywords may be provided before or after arbitrary text. Such keywords may include call, invite, presence, calendar, session, communicate, com, and the like.

Once the search request information is entered and User 1 selects the search icon in the search window 36, the browser 34 will send a Hypertext Transfer Protocol (HTTP) Get message including the search request information to the normal search server 24 (step 100), which may retrieve search results from the search database 26 based on the search request information (step 102). The normal search server 24 will also analyze the search request information to determine whether a communication search is required based on the communication search indicia inherent to the search request information. In this case, the pattern of consecutive words having the first letters in upper case will trigger the communication search. Thus, the normal search server 24 will detect a search request pattern and trigger a communication search (step 104). The normal search server 24 will use all or part of the search request information, which is "Will Smith" in this example, to initiate a communication search by sending a search request to the communication search server 28 (step 106).

As noted above, the communication search server 28 is configured in this embodiment to effect searches of the directory server 30, mail server 22, and call server 20. As such, the communication search server 28 will send a request for contact information for "Will Smith" to the directory server 30 (step 108), which will provide a search internally or at other remote databases, to obtain the contact information for Will Smith. The retrieved contact information is then sent back to the communication server 28 (step 110). In this example, the contact information for Will Smith includes a directory number (343-9871) and an email address (wsmith@abc.com). Next, the communication search server 28 will send a request for calendar or scheduling information for Will Smith to the mail server 22 using the email address, which was obtained from the directory server 30 (step 112). Those skilled in the art will recognize that different types of information may be used to access and search for information for users of the mail server 22. In this example, the email address associated with Will Smith is particularly beneficial in identifying the calendar or scheduling information associated with Will Smith in the mail server 22.

The mail server 22 will use the email address of Will Smith to identify the particular calendar or scheduling information and provide the calendar or scheduling information back to the communication search server 28 (step 114). In this example, both current and future scheduling information may be provided to the communication search server 28. For example, the calendar or scheduling information may indicate that Will Smith is available until 2 p.m. The communication search server 28 may also obtain presence or status information bearing on the relative availability of Will Smith for communications. The presence information may identify the most appropriate communication device associated with Will Smith to use to initiate communications, or Will Smith's general availability for communications regardless of a particular communication device or technique. Additional information about presence information and associated presence systems is provided in commonly assigned U.S. Patent 7,035,923.

The communication search server 28 may send a request for presence information for Will Smith to the call server 20 or other presence system (step 116), which will obtain presence information for Will Smith and provide the presence information back to the communication search server 28 (step 118). In this example, the presence information may indicate that Will Smith is available for communications at the second telephony terminal 18. The communication search server 28 will process the various communication related information obtained from the directory server 30, mail server 22, and call server 20 and provide an appropriate search result and an address (URL) TSF.abc.com corresponding to the communication search server 28 back to the normal search server 24 (step 120). The normal search server 24 may process this information and present the information to the browser 34 (step 122), which will display the search results in the search window 36 to User 1 (step 124).

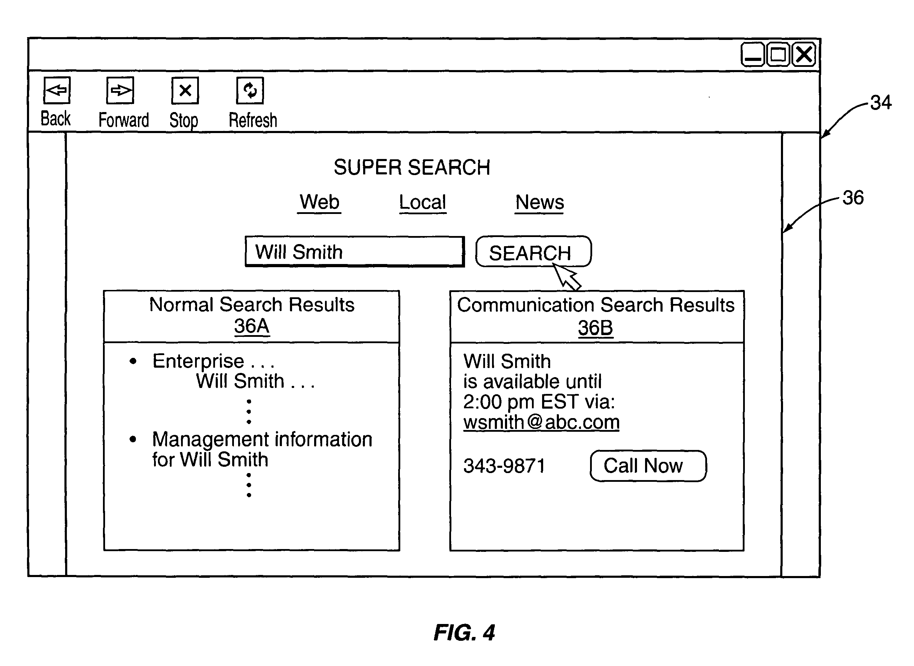

An example search window 36 after the search results have been processed and presented to User 1 is provided in Figure 4. As illustrated, normal search results 36A, which are based on searches of the search database 26 or the Internet, are provided along with the communication search results 36B. The communication search results 36B may include all or a portion of the communication information recovered from the various searches, as well as a communication initiation option. As illustrated, the communication search results may indicate that Will Smith is available until 2 p.m. Eastern Standard Time via email using the email address wsmith@abc.com or by telephone using the directory number 343-9871. The communication initiation option provided in the communication search results 36B provides a link or an icon, such as the "Call Now" button that may be selected by User 1 to initiate a call to Will Smith via the directory number 343-9871 directly from the computing terminal 14, if so equipped, or via an associated communication terminal. In this example, the associated communication terminal is the first telephone terminal 16, and the user elects to initiate the call to Will Smith via the first telephone terminal 16.

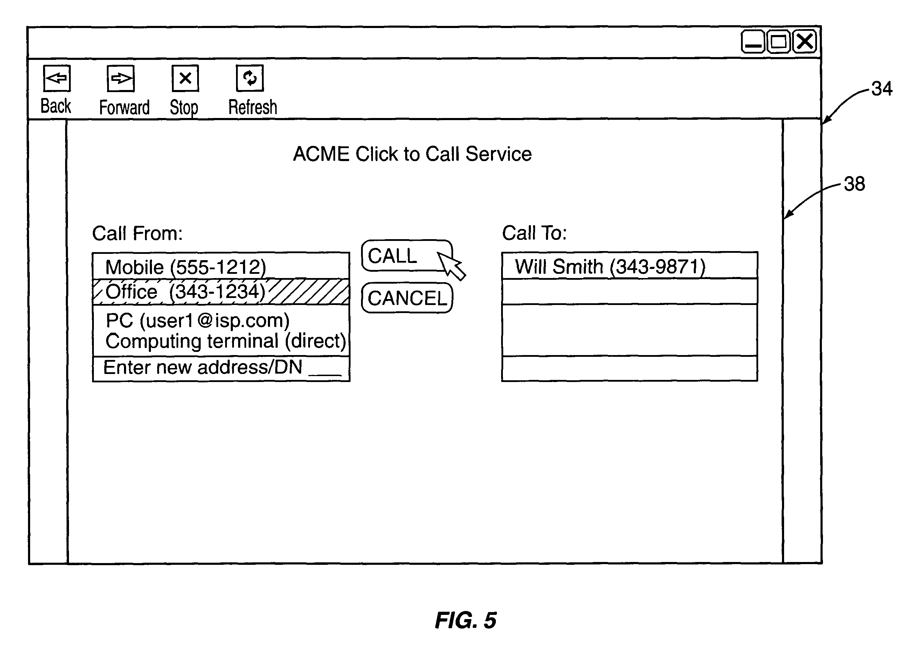

When User 1 selects the click-to-call (C2C) indicia, which is the "Call Now" button in this example, the browser 34 will transfer the directory number for Will Smith to a communication window 38 along with the URL of the communication search server 28 (TSF.abc.com) (step 126). Selecting the C2C indicia triggers the browser 34 to initiate opening of the communication window 38 for C2C content, which is retrieved from the communication search server 28 using the C2C indicia (step 128). The URL of the communication search server 28 may be provided by the normal search server 24 to the search window 36 when the search results are presented to the computing terminal 14. The browser 34 will then send an HTTP Get message to the communication search server 28 to obtain content for the communication window 38 (step 130). The communication search server 28 will provide C2C window content for the communication window 38 for Will Smith in a 200 OK message (step 132). The communication window 38 will display the C2C window content in the communication window 38, which is represented in Figure 5 (step 134).

As illustrated in Figure 5, the C2C window content provided by the communication search server 28 may give User 1 an option to select any number of communication terminals, including the first communication terminal 16, to use for initiating the call, as well as an opportunity to enter an address or directory number of a communication terminal that is not already known by the communication search server 28 or the computing terminal 14. Once User 1 selects the first telephone terminal 16 (Office 343-1234) to use for initiating the call, the browser 34 will send an HTTP Get message to the communication search server 28 to initiate a call from the first telephone terminal 16 (343-1234) to the second telephone terminal 18 (343-9871), which is associated with Will Smith (step 136). The communication search server 28 will acknowledge receipt of the HTTP Get message by providing a 200 OK message back to the communication window 38 to provide the status of the call, which may be presented to User 1 in the communication window 38 (step 138).

To initiate the call, the communication search server 28 may send an Initiate Call message to the call server 20 to establish a call from the first telephone terminal 16 to the second telephone terminal 18 (step 140). The call server 20 will initiate a call to the first telephone terminal 16 (step 142), which when answered by User 1 will send an Answer message back to the call server 20 (step 144). The call server 20 will then initiate a call to the second telephone terminal 18 (step 146), which when answered by the called party will send an Answer message back to the call server 20 (step 148), which will then connect the first and second telephone terminals 16, 18 to establish a voice call therebetween (step 150). Once the call is established, the call server 20 may send a message indicating that the call established to the communication search server 28 (step 152). The communication search server 28 may send another status message to the browser 34, which can present status information, such as an "In Progress" message to User 1 via the communication window 38 (step 154).

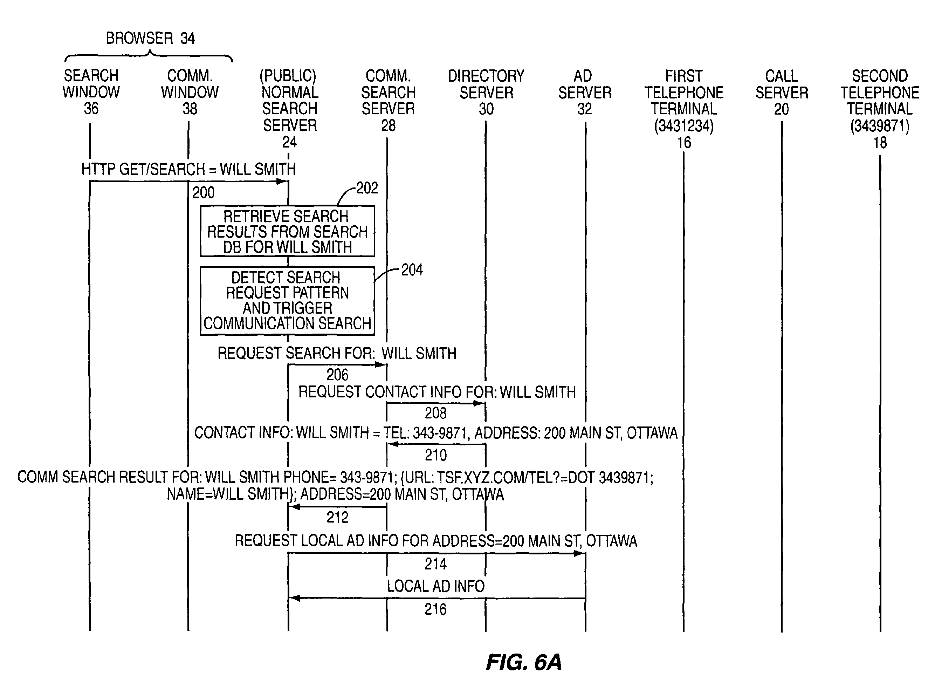

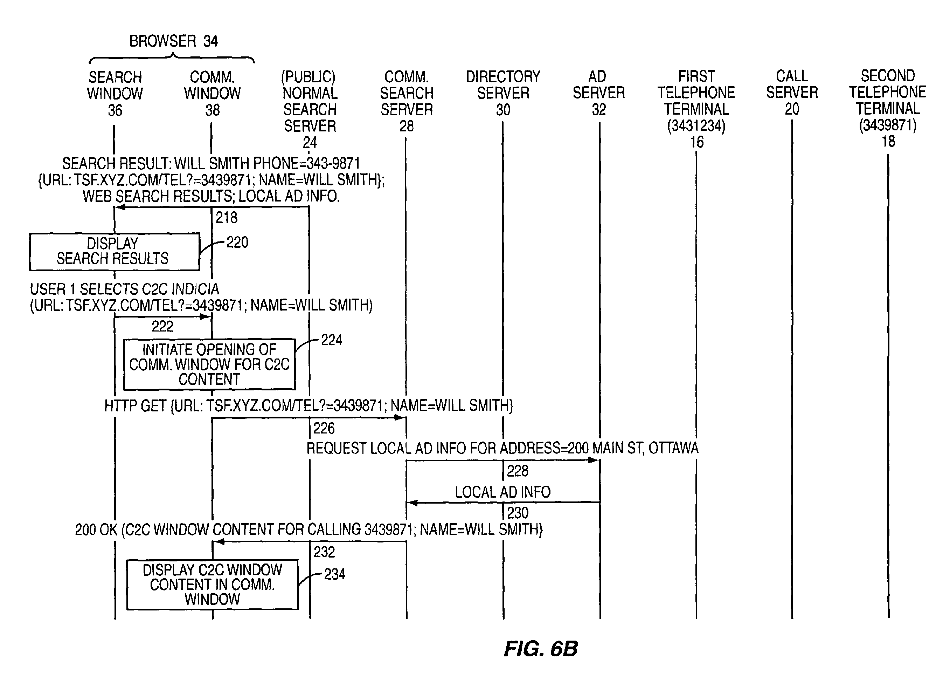

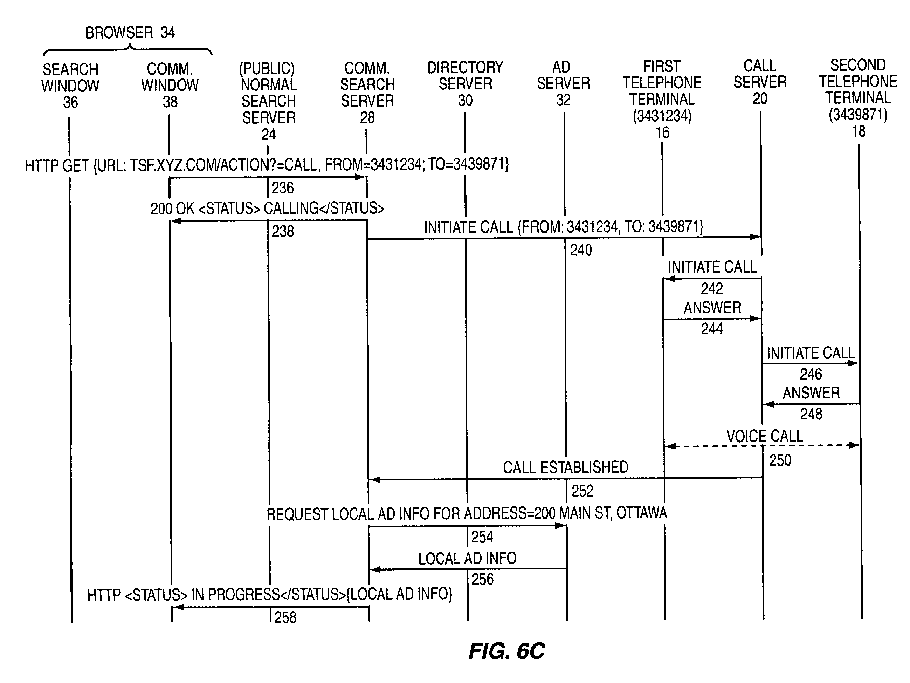

Turning now to Figures 6A-6C, a public environment is illustrated for implementing the present invention. In this example, the normal search server 24 is a traditional web server residing on the Internet, and includes a search engine that is modified according to the present invention to initiate communication searches based on detecting communication search indicia in the search request information provided in a search request. In this example, advertising information is provided to User 1 based on the relative location of the entity subject to the communication search.

Notably, the advertising information may be obtained based on the relative location of the calling party; however, most calls are local and the relative location of the called party is pertinent to the calling party.

Initially, search request information is entered into the search window 36 as depicted in Figure 3, and delivered to the normal search server 24 in an HTTP Get message (step 200). Again, the search request information is "Will Smith." The normal search server 24 may retrieve search results from a database residing on the Internet based on the search request information (step 202), and will analyze the search request information to determine whether a communication search is required based on the communication search indicia inherent to the search request information. Again, the pattern of consecutive words having the first letters in upper case will trigger the communication search. Thus, the normal search server 24 will detect a search request pattern and trigger a communication search (step 204). The normal search server 24 will use all or part of the search request information, which is again "Will Smith," to initiate a communication search by sending a search request to the communication search server 28 (step 206).

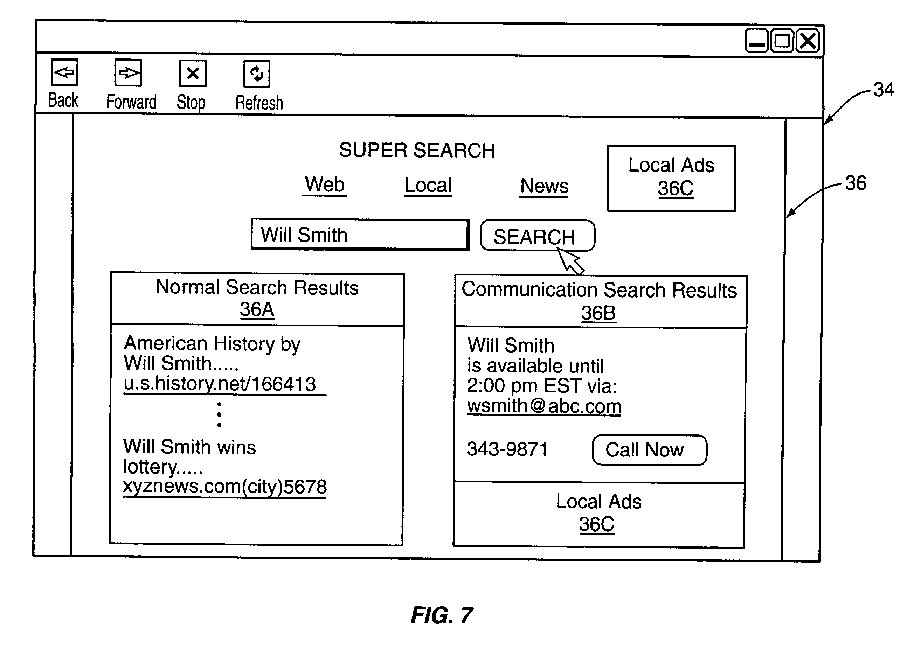

The communication search server 28 will send a request for contact information for "Will Smith" to the directory server 30 (step 208), which will provide a search internally or at other remote databases to obtain the contact information for Will Smith. The directory server 30 will identify the contact information for Will Smith, which may include a directory number (343-9871) and a physical address for Will Smith, and provide this information back to the communication search server 28 (step 210). The communication information for Will Smith is forwarded along with an address of the communication search server 28 (URL:TSF.abc.com) to the normal search server 24 (step 212), which may use the physical address for Will Smith to request local ad information that is targeted to the general location associated with the physical address for Will Smith from the ad server 32 (step 214). The ad server 32 will identify any local advertising information pertinent to the physical address for Will Smith, and provide the local ad information back to the normal search server 24 (step 216). The normal search server 24 will compile the local ad information with the communication information and any search results from the Internet search database, and present the information to the search window 36 of the browser 34 (step 218). The URL of the communication search server 28 is passed to the search window 36 with the search results. An exemplary search window 36 is illustrated in Figure 7, wherein the normal search results 36A from the Internet are provided to the user in the search window 36 along with the communication search results 36B and local advertisements 36C (step 220). As such, User 1 may receive targeted advertising in the search window 36.

If User 1 selects the C2C indicia, which is the "Call Now" button in the search window 36, the search window 36 will deliver the address and directory number associated with Will Smith along with the URL for the communication search server 28 to the communication window 38 (step 222), wherein the browser 34 will initiate the opening and display of the communication window 38 to User 1 (step 224). Using the URL for the communication search server 28, the communication window 38 will send an HTTP Get message identifying Will Smith and his associated directory number to the communication search server 28 (step 226), which will send a request for local advertising information for the physical address of Will Smith, which was previously obtained from the directory server 30, to the ad server 32 (step 228). The ad server 32 will obtain targeted advertising information for the physical address associated with Will Smith, and provide the local ad information back to the communication search server 28 (step 230).

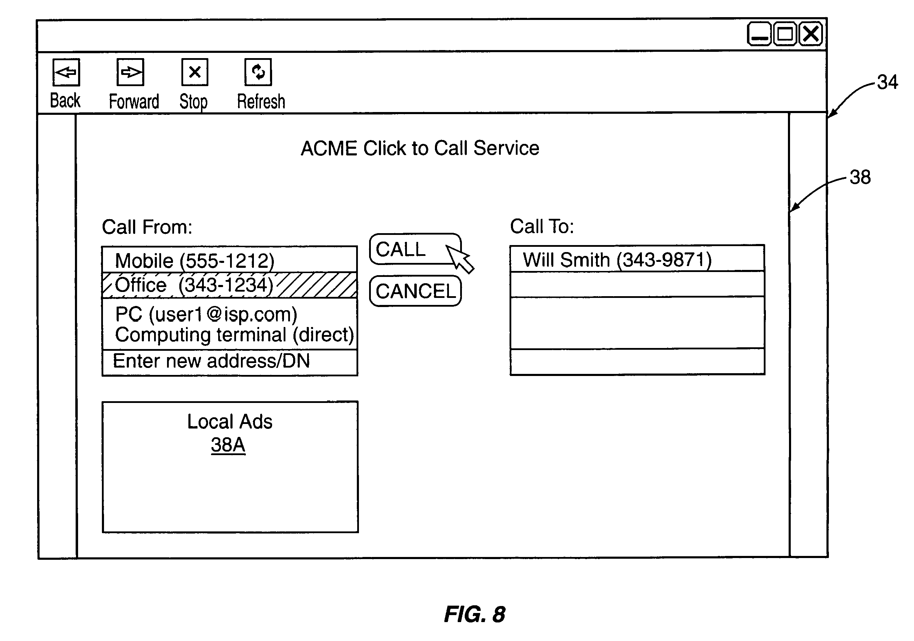

Once the communication search server 28 has received the local ad information from the ad server 32, the C2C window content for the communication window 38 is created with the local ad information and presented to the browser 34 in a 200 OK message (step 232) for display in the communication window 38 (step 234). The communication window 38 with the C2C window content is presented to User 1, as illustrated in Figure 8. Again, the communication window 38 may allow User 1 to select the communication terminal from which the call should be initiated, as well as present the local ad information 38A to User 1. Assume that User 1 selects the first telephone terminal 16 to initiate the call to Will Smith, and selects the Call button. In response, the browser 34 will send an HTTP Get message to the communication search server 28 indicating that a call should be established from the first telephone terminal 16 to the second telephone terminal 18 (step 236). The communication search server 28 may provide status information back to the browser 34 for display on the communication window 38 (step 238), as well as send a message to the call server 20 to initiate the call from the first telephone terminal 16 to the second telephone terminal 18 (step 240).

In response, the call server 20 will initiate a call to the first telephone terminal 16 (step 242), which when answered by User 1 will send an Answer message back to the call server 20 (step 244). Similarly, the call server 20 will initiate a call to the second telephone terminal 18 (step 246), which when answered by the called party will send an Answer message back to the call server 20 (step 248), which will coordinate with the first and second telephone terminals 16, 18 to effect a voice call therebetween (step 250). Once the call is established, the call server 20 may send a message indicating that the call was established back to the communication search server 28 (step 252). Again, the communication search server 28 may request local advertising information using the physical address associated with Will Smith to the ad server 32 (step 254), which will respond with local ad information (step 256). The communication search server 28 may provide a status message to the browser 34 for display on the communication window 38 to indicate that the call is in progress, as well as presenting updated local ad information to User 1 (step 258).

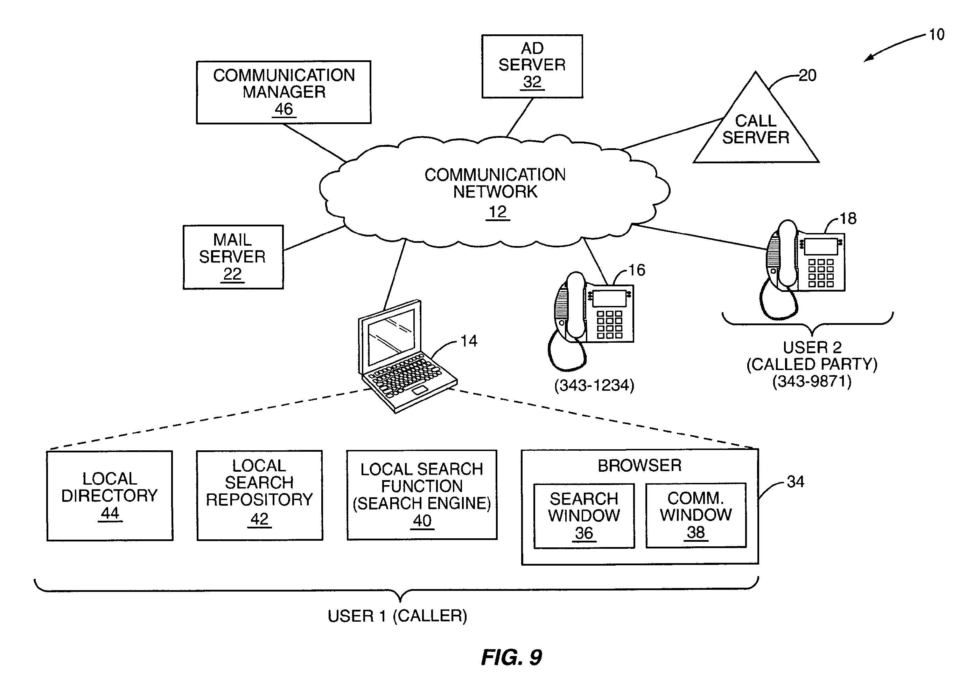

Turning now to Figure 9, another embodiment of the invention is illustrated wherein the search engine is provided in a local search function 40, which resides in the computing terminal 14. The local search function 40 is capable of searching local search repositories 42 as well as a local directory 44. Additionally, the local search function 40 may also facilitate the Internet search function, if so desired. In operation, the local search function 40 is primarily focused on searching the local search repositories 42 of the computing terminal 14. These local search repositories 42 may include local applications, files, databases, and the like that reside on the computing terminal 14. Thus, the local search function 40 is generally a software tool capable of performing extensive searching of the computing terminal 14. The local directory 44 is an application or database in which communication information may be maintained, and may take various forms such as a standalone contact database or a contact database running as part of another application. The local search function 40 may operate in conjunction with the browser 34, as described below. A communication manager 46 is also provided to assist in initiating communication sessions on behalf of User 1. The communication manager 46 may receive instructions from the computing terminal 14 and respond by taking the necessary steps to establish communication sessions involving a communication terminal associated with User 1. For example, the communication manager 46 may instruct the call server 20 to establish a call between the first telephone terminal 16 and the second telephone terminal 18.

In this embodiment, User 1 may enter search request information in a search window 36 of the browser 34, which will initiate a search based on the search request information via the local search function 40. The local search function 40 will analyze the search request information to detect communication search indicia, and if communication search indicia is present, initiate a communication information search in lieu of or in addition to a search of the local search repositories 42.

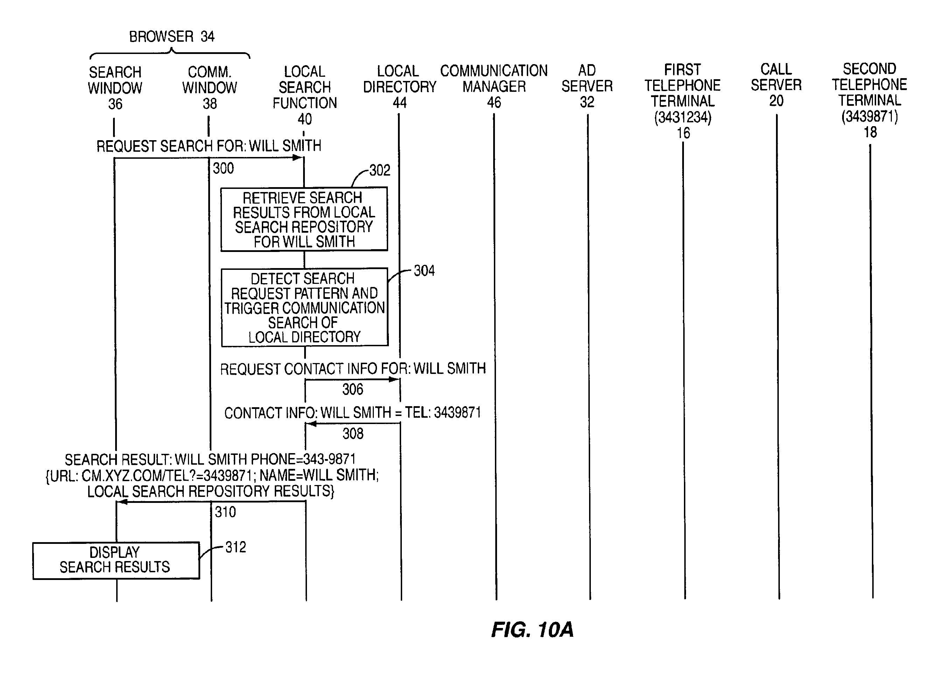

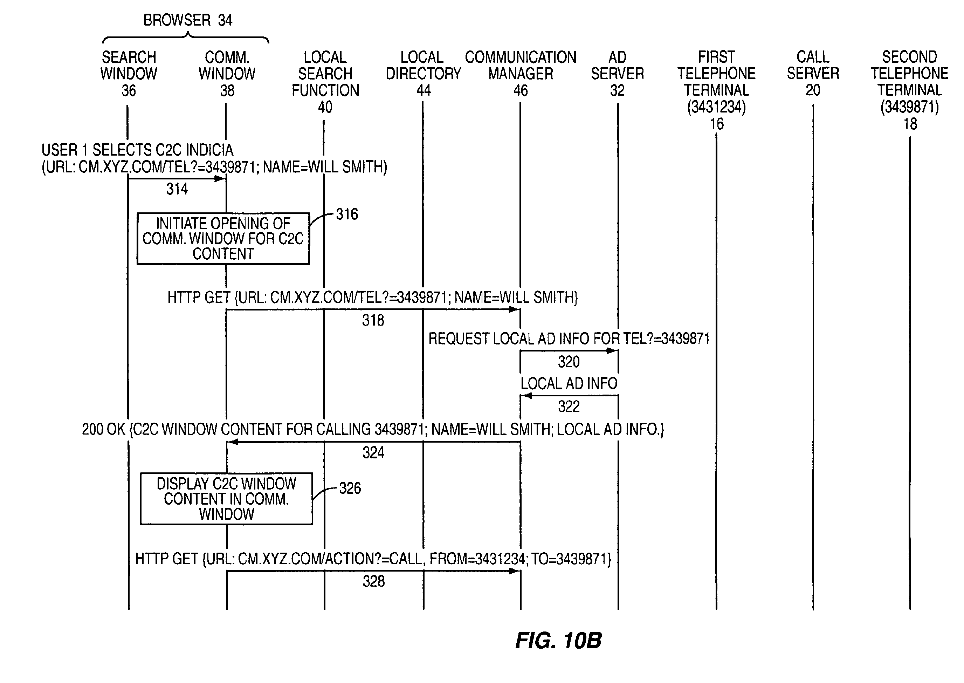

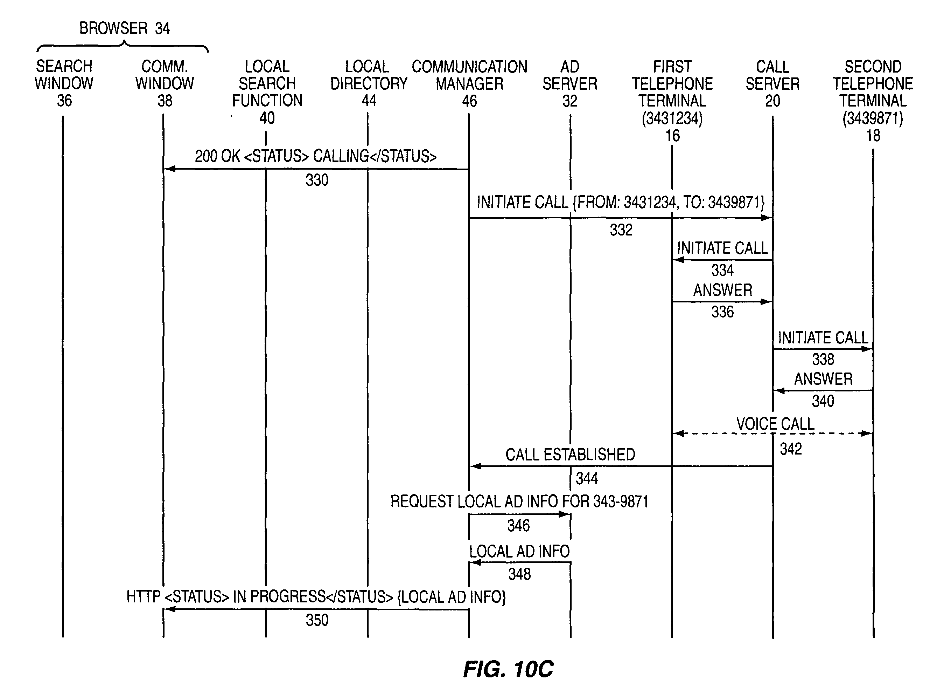

Turning now to Figures 10A-10C, a communication flow is provided for an embodiment wherein a local search function 40 is provided in the computing terminal 14. Initially, User 1 will enter search request information in the search window 36 of the browser 34. The search request information is again "Will Smith." The browser 34 will send a search request including the search request information to the local search function 40 (step 300), which may retrieve search results using the search request information from the local search repository 42 in traditional fashion (step 302). In addition to retrieving the search results from the local search repository 42, the local search function 40 will analyze the search request information provided in the search request to detect the presence of communication search criteria, such as a specific pattern, and trigger a communication search of the local directory 44 (step 304).

Assuming there is communication search indicia present in the search request information, the local search function 40 will request contact information based on all or part of the search request information (Will Smith) to the local directory 44 (step 306). The local directory 44 will conduct a search and provide appropriate contact information back to the local search function 40 (step 308). The local search function 40 may then combine the contact information recovered from the communication information search of the local directory 44 and the search results from the local search repository 42 and present these composite search results to the browser 34 (step 310). The search results are displayed in the search window 36 (step 312). The search results provided by the local search function 40 may identify an address (URL:cm.xyz.com) for the communication manager 46 from which C2C content may be retrieved for the communication window 38. As such, when User 1 selects the C2C indicia provided in the search results of the search window 36 (step 314), the browser 34 may initiate opening of the communication window 38 for C2C content (step 316) and use the address of the communication manager 46 to send an HTTP Get message to the communication manager 46 to obtain the C2C content for the communication window 38 (step 318).

Based on the communication information, the communication manager 46 may send a request for local ad information to the ad server 32 (step 320), which may identify local ad information based on the communication information and provide the local ad information back to the communication manager 46 (step 322). Although this example illustrates obtaining local ad information based on communication information associated with a third party (Will Smith), information associated with User 1 or a communication terminal associated with User 1 may be presented to the local search function 40 and used to obtain local ad information. The communication manager 46 will generate C2C content for the communication window 38 and deliver the C2C content, which may include local ad information, to the browser 34 (step 324). The browser 34 will display the C2C window content in the communication window 38 (step 326).

If User 1 elects to initiate a call to the second telephone terminal 18 via the communication window 38, the browser 34 will send an HTTP Get message to the communication manager 46 (step 328). The HTTP Get message may indicate that the call is initiated from the first telephone terminal 16, which is associated with the directory number 343-1234 and intended for the second telephone terminal 18, which is associated with the directory number 343-9871. The communication manager 46 will receive the HTTP Get message and provide a 200 OK message back to the browser 34 to indicate that the call is being attempted (step 330). This status information may be presented to User 1 via the communication window 38.

The communication manager 46 will then send a message to the call server 20 to initiate a call from the first telephone terminal 16 to the second telephone terminal 18 (step 332). As such, the call server 20 will initiate a call to the first telephone terminal 16 (step 334), which when answered by User 1 will send an Answer message back to the call server 20 (step 336). Similarly, the call server 20 will initiate a call to the second telephone terminal 18 (step 338), which when answered by the called party will send an Answer message back to the call server 20 (step 340). The call server 20 will connect the first telephone terminal 16 and the second telephone terminal 18, or entities supporting these terminals, such that a voice call is established between the first and second telephone terminals 16, 18 (step 342). Once the call is established, an appropriate message indicating that the call has been established may be sent to the communication manager 46 (step 344).

The communication manager 46 at this time or at any other time may request additional local ad information from the ad server 32 based on information associated with User 1 or the communication information associated with the called party (Will Smith) (step 346). The ad server 32 may obtain additional local ad information and present it to the communication manager 46 (step 348), which may deliver status updates along with the updated local ad information to the browser 34 (step 350). As illustrated, the status information indicates that the call is in progress. Thus, the status of the call as well as the updated local ad information may be presented to User 1 in the communication window 38 by the browser 34.

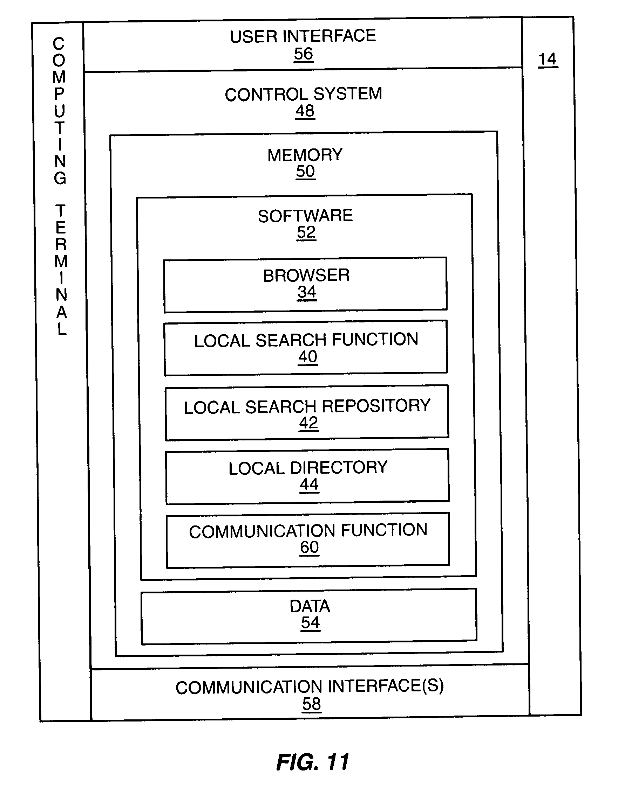

A block representation of a computing terminal 14 is illustrated in Figure 11. The computing terminal 14 will include a control system 48 having sufficient memory 50 for the requisite software 52 and data 54 to operate as described above. In different embodiments, the software 52 may include the browser 34, the local search function 40, the local search repository 42, and the local directory 44. If the computing terminal 14 is capable of facilitating communication sessions with other communication terminals, a communication function 60 may be provided to support one or more different types of communication sessions, including audio, video, voice, and text sessions. The control system 48 is also associated with a user interface 56 and one or more communication interfaces 58, which support communications over the communication network 12 in a direct or indirect fashion. The user interface 56 may include various input and display devices, along with a microphone, speaker, and the requisite circuitry to facilitate voice communications, if so desired.

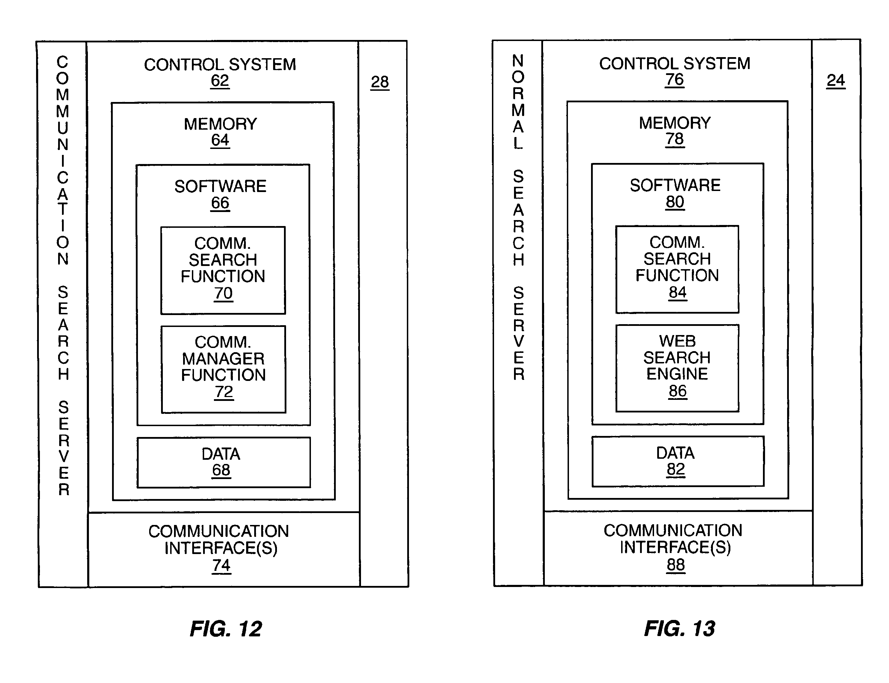

With reference to Figure 12, a communication search server 28 is illustrated according to one embodiment of the present invention. The communication search server 28 will include a control system 62 having sufficient memory 64 for the requisite software 66 and data 68 to operate as described above. The software 66 may include a communication search function 70 to facilitate the communication information searches of the directory server 30 in response to requests from the computing terminal 14. The software 66 may also include a communication manager function 72, which may act as a liaison between the call server 20 and the computing terminal 14 to assist in implementing the click-to-call functionality. The control system 62 is also associated with one or more communication interfaces 74 to facilitate communications over the communication network 12 in a direct or indirect fashion.

A normal search server 24 is illustrated in Figure 13 as including a control system 76 having sufficient memory 48 for the requisite software 80 and data 82 to operate as described above. The software 80 may include a communication search function 84, when the functionality of the communication search server 28 is integrated into the normal search server 24. When the normal search server 24 is effectively a web search server, the software 80 may include a web search engine 86 to facilitate searches over the Internet or like networks. The control system 76 is also associated with one or more communication interfaces 88 to facilitate communications over the communication network 12 in a direct or indirect fashion.

## Claims

1. A method comprising:
• receiving a search request having search request information;
• determining whether communication search indicia is present in the search request information, wherein presence of the communication search indicia is indicative of a need for a communication information search;
• effecting the communication information search based on at least a portion of the search request information to obtain communication information for an entity, when the communication search indicia is present in the search request information; and
• effecting a normal information search based on the search request information to obtain search information, when the communication search indicia is not present in the search request information.

2. The method of claim 1 wherein the communication search indicia identifies at least one of the group consisting of the entity, a physical address associated with the entity, and a communication address associated with the entity.

3. The method of claim 1 wherein the communication information identifies at least one of the group consisting of status information associated with the entity, presence information associated with the entity, and calendar or scheduling information associated with the entity.

4. The method of claim 1 wherein the search request is received from a terminal associated with an enterprise network, and effecting the communication information search comprises:
• sending a request to an enterprise directory server, which identifies enterprise related information as the communication information; and
• receiving a response having the communication information from the enterprise directory server.

5. The method of claim 1 wherein the search request is received from a terminal, and effecting the communication information search comprises:
• sending a request to a public directory server, which identifies the communication information; and
• receiving a response having the communication information from the public directory server.

6. The method of claim 1 wherein the search request is received from an associated function within a terminal, and effecting the communication information search comprises searching a local repository of information in the terminal to obtain the communication information.

7. The method of claim 6 wherein the associated function is a browser running on the terminal.

8. The method of claim 1 wherein the search request is received from a first terminal, and further comprising:
• receiving the communication information; and
• sending the communication information to the first terminal, which is configured to present the communication information to a user.

9. The method of claim 1 wherein the search request is received from a first terminal, and further comprising:
• receiving the communication information;
• generating a response configured to provide a communication option based on the communication information; and
• sending the response to the first terminal, which is configured to present the communication option to a user, wherein when the communication option is selected, a communication session is initiated with the entity using the communication information.

10. The method of claim 9 wherein the communication session is initiated between a second terminal associated with the user and a third terminal associated with the entity.

11. The method of claim 1 further comprising:
• effecting the normal information search based on the search request information to obtain the search information, when the communication search indicia is present in the search request information;
• receiving the communication information from the communication information search;
• receiving the search information from the normal information search; and
• sending the search information and at least one of the communication information and a communication initiation option based on the communication information to a first terminal.

12. The method of claim 11 wherein the search information and at least one of the communication information and the communication initiation option based on the communication information is configured to be presented together to a user of the first terminal.

13. The method of claim 1 wherein effecting the communication search further comprises identifying advertising information based on the communication information, and the method further comprises:
• receiving the communication information and the advertising information from the communication information search; and
• sending the advertising information and at least one of the communication information and a communication initiation option based on the communication information to a first terminal.

14. The method of claim 1 wherein effecting the communication search further comprises identifying advertising information based on information associated with a first terminal or a user of the first terminal and the method further comprises:
• receiving the communication information and the advertising information from the communication information search; and
• sending the advertising information and at least one of the communication information or a communication initiation option based on the communication information to the first terminal.

15. The method of claim 1 wherein the communication search indicia is at least one of the group of a keyword and a pattern within the search request information.

16. A system comprising:
• at least one communication interface; and
• a control system associated with the at least one communication interface and adapted to:
• receive a search request having search request information;
• determine whether communication search indicia is present in the search request information, wherein presence of the communication search indicia is indicative of a need for a communication information search;
• effect the communication information search based on at least a portion of the search request information to obtain communication information for an entity, when the communication search indicia is present in the search request information; and
• effect a normal information search based on the search request information to obtain search information, when the communication search indicia is not present in the search request information.
